# EUROPEAN PATENT APPLICATION

(11) **EP 4 832 061 A1**
(43) Date of publication of application: **28.10.2026**
(21) Application number: 26172449.6
(22) Date of filing: 15.04.2026
(51) Int. Cl.: H01M 4/04, H01M 4/38, H01M 4/134, H01M 4/1395, H01M 4/02

(54) **BATTERY AND METHOD FOR MANUFACTURING BATTERY**

(30) Priority: 22.04.2025 JP 2025070511
(71) Applicant: Toyota Jidosha Kabushiki Kaisha, Toyota-shi, Aichi-ken 471-8571 (JP)
(72) Inventor: FURUYA, Ryosuke, TOYOTA-SHI, AICHI-KEN, 471-8571 (JP); NOMOTO, Kazushige, TOYOTA-SHI, AICHI-KEN, 471-8571 (JP); NAKAI, Takaaki, TOYOTA-SHI, AICHI-KEN, 471-8571 (JP); NAKAMOTO, Hirofumi, TOYOTA-SHI, AICHI-KEN, 471-8571 (JP); KUDO, So, TOYOTA-SHI, AICHI-KEN, 471-8571 (JP); YOKOI, Yuma, TOYOTA-SHI, AICHI-KEN, 471-8571 (JP)
(74) Representative: Cabinet Beau de Loménie

(57) **Abstract**

A battery includes a cathode current collector (1), a cathode layer (2), an electrolyte layer (3), an anode layer (4), and an anode current collector (5) in the stated order in a thickness direction. The anode layer contains at least one of a Si-based active material and a Sn-based active material. When a thickness of the anode layer is T, a region of the anode layer at a distance of 0T or more and 0.33T or less from an end of the anode layer near the electrolyte layer in the thickness direction is a first region, and a region of the anode layer at a distance of 0.66T or more and 1.0T or less is a second region, and when a porosity of the first region and a porosity of the second region are X and Y, respectively, X is more than Y, and X is 15% or more and 35% or less.

## Description

### 1. Field of the Invention

The present disclosure relates to a battery and a method for manufacturing the battery.

### 2. Description of Related Art

Battery development has been active in recent years. For example, in the automotive industry, batteries for use in battery electric vehicles (BEVs), plug-in hybrid electric vehicles (PHEVs), and hybrid electric vehicles (HEVs) have been actively developed. A battery typically includes a cathode layer, an anode layer, and an electrolyte layer disposed between the cathode layer and the anode layer. Active materials containing Si (Si-based active materials) and active materials containing Sn (Sn-based active materials) are known as electrode active materials.

For example, Japanese Unexamined Patent Application Publication No. 2019-121557 (JP 2019-121557 A) discloses an anode layer for use in an all-solid-state battery. The anode layer contains an anode active material and a sulfide solid electrolyte. The anode active material is a composite particle that includes a plurality of particles containing Si or Sn and a binder, and the anode active layer has a porosity of 15% or less. Japanese Unexamined Patent Application Publication No. 2021-005461 (JP 2021-005461 A) discloses a non-aqueous electrolyte secondary battery including an anode active material layer. The anode active material layer includes a first layer and a second layer. The first layer is disposed between a cathode and the second layer. The ratio of the porosity of the first layer to the porosity of the second layer is more than 1.

### SUMMARY OF THE INVENTION

Si and Sn have large theoretical capacities and are effective in increasing the energy density of batteries. However, the volume change during charging and discharging is large. Therefore, anode layers and batteries using Si and Sn may also undergo large volume changes during charging and discharging. When the volume change of a battery is large, the electron conduction path and the ion conduction path may be interrupted, which may increase the battery resistance. Further, a binding member that binds the battery is required to have a higher strength and a larger size, which may result in a decrease in energy density of the battery. In this regard, it is conceivable that the volume change of the anode layer can be suppressed by providing pores in the anode layer in advance, but the electron conduction path and the ion conduction path may be interrupted by the voids, which may increase the battery resistance.

The present disclosure has been made in view of the above circumstances, and has a main object to provide a battery in which an increase in resistance is suppressed and the amount of volume change is reduced.
[1] A battery including a cathode current collector, a cathode layer, an electrolyte layer, an anode layer, and an anode current collector in order of the cathode current collector, the cathode layer, the electrolyte layer, the anode layer, and the anode current collector in a thickness direction, in which:
   the anode layer contains at least one of a Si-based active material and a Sn-based active material; and
   when a thickness of the anode layer is defined as T, a region of the anode layer at a distance of 0T or more and 0.33T or less from an end of the anode layer near the electrolyte layer in the thickness direction is defined as a first region, and a region of the anode layer at a distance of 0.66T or more and 1.0T or less from the end in the thickness direction is defined as a second region, and
   when a porosity of the first region and a porosity of the second region that are measured from a sectional image of the battery are defined as X and Y, respectively,
   the X is more than the Y, and
   the X is 15% or more and 35% or less.
[2] The battery according to [1], in which the X and the Y satisfy (X - Y) ≥ 2 (here, "2" means 2 percentage points).
[3] The battery according to [1] or [2], in which the Y is 8% or more and 13% or less.
[4] The battery according to any one of [1] to [3], in which:
   the anode layer contains the Si-based active material; and
   the Si-based active material is a composite particle in which a plurality of primary particles is agglomerated together with a binder.
[5] A method for manufacturing the battery according to any one of [1] to [4], the method including:
   preparing a laminate including the cathode current collector, the cathode layer, the electrolyte layer, a precursor layer of the anode layer, and the anode current collector in order of the cathode current collector, the cathode layer, the electrolyte layer, the precursor layer of the anode layer, and the anode current collector in the thickness direction; and
   charging the laminate such that the X and the Y are obtained in the precursor layer.

The present disclosure has an effect of providing the battery in which an increase in resistance is suppressed and the amount of volume change is reduced.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic sectional view illustrating a battery according to the present disclosure;
FIG. 2 is a schematic sectional view illustrating an anode layer according to the present disclosure;
FIG. 3 is a flowchart illustrating a method for manufacturing the battery according to the present disclosure; and
FIG. 4 is a graph showing results of examples and comparative examples.

### DETAILED DESCRIPTION OF EMBODIMENTS

Hereinafter, a battery and a method for manufacturing the battery according to the present disclosure will be described in detail. Each drawing shown below is a schematic drawing, and the size and shape of each part are exaggerated as appropriate to facilitate understanding.

### A. Battery

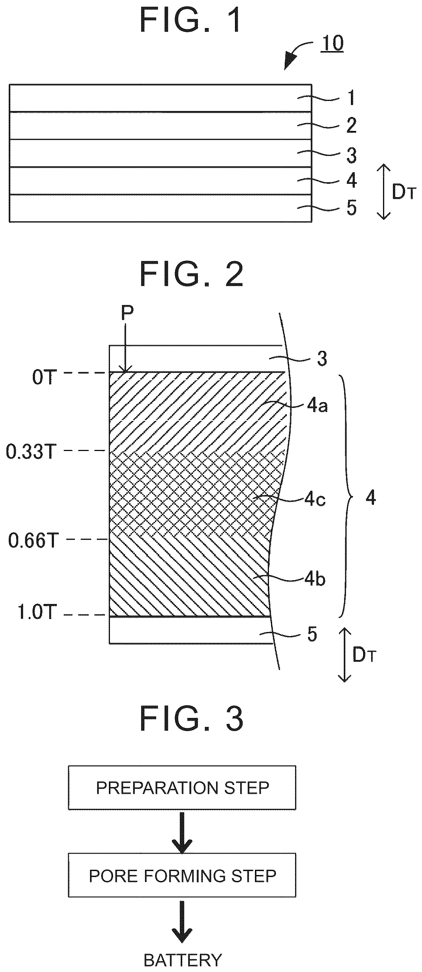

FIG. 1 is a schematic sectional view illustrating the battery according to the present disclosure, and FIG. 2 is a schematic sectional view illustrating an anode layer according to the present disclosure. As shown in FIG. 1, a battery 10 includes a cathode current collector 1, a cathode layer 2, an electrolyte layer 3, an anode layer 4, and an anode current collector 5 in the stated order in a thickness direction D_{T}. The anode layer 4 contains at least one of a Si-based active material and a Sn-based active material. As shown in FIG. 2, when the thickness of the anode layer 4 is defined as T, a region of the anode layer 4 at a distance of 0T or more and 0.33T or less from an end P of the anode layer 4 near the electrolyte layer 3 in the thickness direction D_{T} is defined as a first region 4a, a region of the anode layer 4 at a distance of 0.66T or more and 1.0T or less from the end P in the thickness direction D_{T} is defined as a second region 4b, and the porosity of the first region 4a and the porosity of the second region 4b that are measured from a sectional image of the battery 10 are defined as X and Y, respectively, X is more than Y, and X is 15% or more and 35% or less. In the present disclosure, the simple term "anode active material" refers to both the Si-based active material and the Sn-based active material.

In the present disclosure, the porosity X of the first region in the anode layer is more than the porosity Y of the second region, and the porosity X is 15% or more and 35% or less. Therefore, in the battery, an increase in resistance is suppressed and the amount of volume change is reduced.

As described above, it is required to suppress the volume change of the anode layer containing the Si-based active material or the Sn-based active material. In this regard, it is conceivable that the volume change of the anode layer can be suppressed by increasing the porosity of the anode layer to provide spaces that can absorb the volume change of the anode active material, but the battery resistance may increase. In the battery of the present disclosure, the porosity of the first region of the anode layer located near the electrolyte layer is more than that of the second region located near the anode current collector, and is within the predetermined range. In the anode layer, the anode active material located near the electrolyte layer contributes preferentially to the battery reaction. Therefore, the volume change of the anode layer can be effectively suppressed by increasing the porosity near the electrolyte layer. By reducing the porosity near the anode current collector, the porosity of the entire anode layer can be reduced, and an increase in battery resistance can be suppressed.

### 1. Anode Layer

### (1) Aspects of Anode layer

FIG. 2 is a schematic sectional view illustrating the anode layer according to the present disclosure. When the thickness of the anode layer 4 is defined as T, the region of the anode layer 4 at the distance of 0T or more and 0.33T or less from the end P of the anode layer 4 near the electrolyte layer 3 in the thickness direction D_{T} is defined as the first region 4a, and the region of the anode layer 4 at the distance of 0.66T or more and 1.0T or less from the end P in the thickness direction D_{T} is defined as the second region 4b. The position at the distance of 0T can be regarded as the position of the interface between the electrolyte layer 3 and the anode layer 4, and the position at the distance of 1.0T can be regarded as the position of the interface between the anode layer 4 and the anode current collector 5.

In the anode layer, the porosity X of the first region is more than the porosity Y of the second region. The porosity X is 15% or more and 35% or less. The porosity X may be 16% or more, 20% or more, 25% or more, or 26% or more. The porosity X may be 33% or less, 30% or less, 28% or less, or 26% or less. When the porosity X is too low, there is too little room to absorb the volume change of the anode active material, and the fluctuation in binding pressure cannot be suppressed sufficiently. When the porosity X is too high, the number of contact points between the anode layer and the electrolyte layer is too small, and the battery resistance increases.

The porosity Y of the second region is not particularly limited as long as it is less than the porosity X of the first region, but the porosity Y is preferably smaller. When the porosity Y is too high, the battery resistance may increase. The porosity Y is, for example, 5% or more, and may be 8% or more, 9% or more, or 10% or more. The porosity Y is, for example, 15% or less, and may be 13% or less, 11% or less, 10% or less, or 9% or less.

A difference (X - Y) between the porosity X and the porosity Y is not particularly limited, but is, for example, 2 or more, and may be 5 or more, or 10 or more. The difference (X - Y) is, for example, 25 or less, and may be 20 or less.

As shown in FIG. 2, a region of the anode layer 4 at a distance of more than 0.33T and less than 0.66T from the end P of the anode layer 4 near the electrolyte layer 3 is defined as a third region 4c, and the porosity of the third region 4c is defined as Z. The porosity Z may be the same as or different from the porosity X. In the latter case, the porosity Z may be smaller or larger than the porosity X. The porosity Z may be the same as or different from the porosity Y. In the latter case, the porosity Z may be smaller or larger than the porosity Y. The same porosity means that the absolute value of the difference in porosity (%) is 0.1 or less.

The porosity of the third region may be uniform or non-uniform in the thickness direction. For example, the third region may include, in the thickness direction, a region α having a high porosity and a region β having a lower porosity than the region α. In the thickness direction, the region α is preferably located closer to the first region, and the region β is preferably located closer to the second region than the region α. The region α is, for example, a region at a distance of 0.34T or more and 0.45T or less from the end near the electrolyte layer, and the region β is, for example, a region at a distance of 0.46T or more and 0.65T or less from the end near the electrolyte layer.

The porosity Z is, for example, 8% or more and 35% or less. The porosity of the region α is, for example, 15% or more and 35% or less, and the porosity of the region β is, for example, 8% or more and 15% or less.

The porosity of the anode layer can be determined by microscopic observation using, for example, a scanning electron microscope (SEM). The pores in the anode layer can be determined as portions where no solid components such as the anode active material and the solid electrolyte are observed when the cross section of the anode layer is observed. As illustrated later in "B. Method for Manufacturing Battery," the battery of the present disclosure undergoes predetermined charging during the manufacturing process. Further, batteries available on the market are typically charged. Therefore, the porosity in the present disclosure is typically the porosity of the anode layer at least after initial charging.

### (2) Materials for Anode Layer

The anode layer contains at least one of a Si-based active material containing Si and a Sn-based active material containing Sn. The Si-based active material and the Sn-based active material function as anode active materials. The anode layer may contain at least one of a conductive material, a binder, and an electrolyte as necessary.

The Si-based active material is an active material containing Si, and examples thereof include elemental Si, SiC composite active materials, alloys containing Si as a main component (Si alloys), and Si oxides. Examples of SiC composite active materials include active materials in which Si or an Si alloy is supported on a carbon support. Examples of oxide-based active materials include lithium titanate such as Li₄Ti₅O₁₂.

The Sn-based active material is an active material containing Sn, and examples thereof include elemental Sn and alloys containing Sn as a main component (Sn alloys).

The anode layer may contain only the Si-based active material as the anode active material, or may contain only the Sn-based active material, or may contain both the Si-based active material and the Sn-based active material.

The anode active material may be primary particles, or secondary particles that are an agglomerate of the primary particles. The anode active material may be composite particles in which a plurality of the primary particles is agglomerated together with a binder. The type of the binder in the composite particles is not particularly limited. Examples of the binder include rubber-based binders such as butadiene rubber (BR) and styrene butadiene rubber (SBR), and fluoride-based binders such as polyvinylidene fluoride (PVdF).

The anode active material may be solid particles, or may be porous particles having pores inside, particularly inside the primary particles.

The anode active material has, for example, a spherical shape. The average particle size (D₅₀) of the anode active material is, for example, 10 nm or more and 20 µm or less. The average particle size (D₅₀) can be calculated, for example, by measurement using a laser diffraction particle size distribution meter or a scanning electron microscope (SEM).

The proportion of the anode active material in the anode layer is, for example, 50% by weight or more and 90% by weight or less.

Examples of conductive materials include carbon materials, metal particles, and conductive polymers. Examples of carbon materials include particulate carbon materials such as acetylene black (AB) and Ketjen black (KB), and fibrous carbon materials such as carbon fibers, carbon nanotubes (CNTs), and carbon nanofibers (CNFs). The proportion of a conductive aid in the anode layer is, for example, 0.1% by weight or more and 10% by weight or less. Examples of the binder include the above rubber-based binders and fluoride-based binders.

The type of the electrolyte will be described in "3. Electrolyte Layer." The proportion of the electrolyte in the anode layer is, for example, 10% by weight or more and 60% by weight or less.

### 2. Cathode Layer

The cathode layer contains at least a cathode active material. The cathode layer may contain at least one of a conductive material, a binder, and an electrolyte as necessary. The conductive material, the binder, and the electrolyte are the same as those described in "1. Anode Layer."

Examples of the cathode active material include oxide active materials. Examples of oxide active materials include rock-salt layered active materials such as LiCoO₂, LiNi_{1/3}CO_{1/3}Mn_{1/3}O₂, and LiNi_{0.8}Co_{0.15}Al_{0.15}Al_{0.05}O₂, spinel active materials such as LiMn₂O₄ and Li₄Ti₅O₁₂, and olivine active materials such as LiFePO₄.

A coating layer containing a Li-ion conductive oxide such as LiNbO₃ may be formed on the surface of the oxide active material.

The cathode active material is, for example, in the form of particles. The average particle size D₅₀ of the cathode active material is, for example, 0.5 µm or more and 50 µm or less. D₅₀ is as described above.

The thickness of the cathode layer is not particularly limited, but is, for example, 30 µm or more and 1000 µm or less.

### 3. Electrolyte Layer

The electrolyte layer is disposed between the cathode layer and the anode layer, and contains at least an electrolyte. The electrolyte layer may contain a solid electrolyte or a liquid electrolyte (electrolytic solution), and the former is preferable. An electrolyte layer containing a solid electrolyte is called a solid electrolyte layer. A battery including a solid electrolyte layer is generally called a solid-state battery. The solid-state battery may be a semi-solid-state battery or an all-solid-state battery. A battery including a solid electrolyte layer containing only an inorganic solid electrolyte as the solid electrolyte corresponds to an all-solid-state battery.

Examples of the solid electrolyte include inorganic solid electrolytes such as sulfide solid electrolytes, oxide solid electrolytes, nitride solid electrolytes, halide solid electrolytes, and complex hydrides. Among these, sulfide solid electrolytes are particularly preferable. This is because the sulfide solid electrolytes have high ionic conductivity. The sulfide solid electrolyte typically contains sulfur (S) as a main component of anionic elements. The oxide solid electrolytes, the nitride solid electrolytes, and the halide solid electrolytes typically contain oxygen (O), nitrogen (N), and halogen (X), respectively, as the main component of anionic elements.

The sulfide solid electrolyte preferably contains, for example, Li, an X element (X is at least one of P, As, Sb, Si, Ge, Sn, B, Al, Ga, and In), and S. The sulfide solid electrolyte may further contain at least one of O and a halogen element.

Examples of sulfide solid electrolytes include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numerals, and Z is any one of Ge, Zn, and Ga), Li₂S-GeS₂, Li₂S-SiS₂-Li₃PO₄, and Li₂S-SiS₂-LiₓMO_{y} (where x and y are positive numerals, and M is any one of P, Si, Ge, B, Al, Ga, and In).

The solid electrolytes may also include organic solid electrolytes such as polymer electrolytes and gel electrolytes.

The electrolyte layer may contain a binder as necessary. Examples of the binder include the binders described in "1. Anode Layer." The thickness of the electrolyte layer is not particularly limited, but is, for example, 1 µm or more and 1000 µm or less.

### 4. Anode Current Collector and Cathode Current Collector

The anode current collector is a member that collects electrons from the anode layer, and the cathode current collector is a member that collects electrons from the cathode layer. Examples of materials for the cathode current collector include stainless steel (steel use stainless (SUS)), aluminum, nickel, iron, titanium, and carbon. Examples of materials for the anode current collector include SUS, copper, nickel, and carbon. A coating layer containing at least one of Ni, Cr, and C may be formed on the surface of each of the cathode current collector and the anode current collector. The coating layer may be a plated layer or a vapor-deposited layer. The cathode current collector and the anode current collector may be, for example, in the form of foil.

### 5. Battery

The battery of the present disclosure may include an outer casing that houses the above members. Examples of the outer casing include a laminated outer casing and a case-type outer casing. The battery of the present disclosure may also include a binding jig that applies a binding pressure to the above members in the thickness direction. The binding jig may be a known jig. The binding pressure is, for example, 0.1 MPa or more and 50 MPa or less, and may be 1 MPa or more and 20 MPa or less.

The battery of the present disclosure is typically a lithium-ion secondary battery. As described above, the battery of the present disclosure may be a solid-state battery including a solid electrolyte layer. The battery of the present disclosure may be a semi-solid-state battery or an all-solid-state battery. The battery is applied to, for example, a power supply for vehicles such as a hybrid electric vehicle (HEV), a plug-in hybrid electric vehicle (PHEV), a battery electric vehicle (BEV), a gasoline automobile, and a diesel automobile. The battery of the present disclosure may be used as a power supply for moving bodies other than vehicles (e.g., trains, ships, and aircraft), or may be used as a power supply for electrical products such as information processing devices.

### B. Method for Manufacturing Battery

FIG. 3 is a flowchart illustrating the method for manufacturing the battery according to the present disclosure. The method for manufacturing the battery according to the present disclosure is a method for manufacturing the battery described above. The method includes first preparing a laminate including the cathode current collector, the cathode layer, the electrolyte layer, a precursor layer of the anode layer, and the anode current collector in the stated order in the thickness direction (preparation step). The method includes subsequently charging the laminate such that the porosity X and the porosity Y are obtained in the precursor layer (pore forming step).

### 1. Preparation Step

The preparation step is a step of preparing a laminate including the cathode current collector, the cathode layer, the electrolyte layer, a precursor layer of the anode layer, and the anode current collector in the stated order.

The cathode current collector, the cathode layer, the electrolyte layer, and the anode current collector are the same as those described in "A. Battery." The materials for the precursor layer of the anode layer are the same as those described in "1. Anode Layer." Typically, in the precursor layer of the anode layer, at least the porosity X is not satisfied. The porosity of the precursor layer is, for example, 10% or less.

The cathode layer, the electrolyte layer, and the precursor layer can be formed by a coating method using a slurry as described later in the examples.

### 2. Pore Forming Step

The pore forming step is a step of charging the laminate such that the porosity X and the porosity Y are obtained in the precursor layer. For example, the pores can be formed by performing charging at a relatively high current value (C rate) to intentionally crack the Si-based anode active material located near the electrolyte layer.

The C rate in the pore forming step is not particularly limited as long as the porosity X and the porosity Y are obtained, and can be adjusted as appropriate depending on the battery configuration such as the materials for the anode layer. The C rate is, for example, 1/30C or more, and may be 1/10C or more. The C rate is, for example, 1C or less, and may be 1/2C or less.

The voltage to be reached in the pore forming step is not particularly limited as long as the porosity X and the porosity Y are obtained, and can be adjusted as appropriate depending on the battery configuration such as the materials for the anode layer. The voltage is, for example, 3.5 V or more and 4.05 V or less.

The charging in the pore forming step is preferably any one of initial (first) charging to fifth charging.

### 3. Battery

The battery manufactured by the above steps is the same as that described in "A. Battery."

The present disclosure is not limited to the above embodiment. The above embodiment is merely exemplary, and any structure having substantially the same configuration as, and having similar functions and effects to, the technical idea described in the claims of the present disclosure is encompassed by the technical scope of the present disclosure.

### Comparative Example 1

### Preparation of Anode

Composite particles in which primary particles (elemental Si particles) were agglomerated together with a binder were prepared as the anode active material. The composite particles were produced by a spray drying method using a slurry prepared by adding Si particles to a binder solution. The binder solution was prepared by dissolving a binder in an organic solvent. The composite particles, a solid electrolyte (Li₂S-P₂S₅-based sulfide solid electrolyte), a binder (PVDF), and a conductive material (VGCFs) were added to the organic solvent and kneaded using an ultrasonic homogenizer. In this way, an anode slurry was prepared. The anode slurry was applied onto an anode current collector (Ni foil) and dried. In this way, an anode including a precursor layer of the anode layer and the anode current collector was prepared.

### Preparation of Cathode

A cathode active material (LiNi_{0.8}Co_{0.15}Mn_{0.05}O₂), a solid electrolyte (Li₂S-P₂S₅-based sulfide solid electrolyte), a binder (PVDF), and a conductive material (VGCFs) were added to an organic solvent and kneaded using an ultrasonic homogenizer. In this way, a cathode slurry was prepared. The cathode slurry was applied onto a cathode current collector (Al foil) and dried. In this way, a cathode including a cathode layer and the cathode current collector was prepared.

### Preparation of Laminate

A solid electrolyte (Li₂S-P₂S₅-based sulfide solid electrolyte) and a binder (PVDF) were added to an organic solvent and kneaded using an ultrasonic homogenizer. In this way, a slurry was prepared. The slurry was applied onto a transfer foil (Al foil) and dried. In this way, a transfer member including the transfer foil and a solid electrolyte layer was prepared.

The anode, the cathode, and the transfer member were molded into a strip. Then, the anode and the transfer member were stacked such that the precursor layer and the solid electrolyte layer faced each other, and were roll-pressed at 25°C and 50 kN/cm. After the pressing, the transfer foil was peeled off to obtain an anode-side member in which the solid electrolyte layer was transferred onto the precursor layer. Further, the cathode and the transfer member were stacked such that the cathode layer and the solid electrolyte layer faced each other, and were roll-pressed at 165°C and 50 kN/cm. After the pressing, the transfer foil was peeled off to obtain a cathode-side member in which the solid electrolyte layer was transferred onto the cathode layer. Next, the anode-side member was punched out to a diameter of 13.00 mm, and the cathode-side member was punched out to a diameter of 11.28 mm. A sulfide solid electrolyte powder was placed on the solid electrolyte layer of the punched anode member, and the resulting product was uniaxially pressed to form a solid electrolyte layer for joining. Next, the anode-side member and the cathode-side member were stacked such that the solid electrolyte layers faced each other. Then, current extraction tabs were attached to the cathode and the anode, and the resultant was sealed in an aluminum laminate using a vacuum laminate sealer and bound at a pressure of 5 MPa. In this way, a laminate including the cathode current collector, the cathode layer, the electrolyte layer, the precursor layer of the anode layer, and the anode current collector in the stated order in the thickness direction was obtained.

### Preparation of Evaluation Battery (Initial Charging)

The laminate was initially charged at 1/50C up to 4.05 V. In this way, an evaluation battery (all-solid-state battery) was prepared.

### Examples 1 to 5 and Comparative Examples 2 to 3

Evaluation batteries were prepared in the same manner as in Comparative Example 1, except that the C rate in the initial charging was increased. The C rate in Example 1 was 1/10C, and the C rate in Comparative Example 3 was 1C. From Example 1 to Example 5, the C rate was increased stepwise. The C rate in Comparative Example 2 was larger than that in Example 5, and the C rate in Comparative Example 3 was larger than that in Comparative Example 2.

### Evaluation

### Microscopic Observation

Sectional SEM images of the anode layer were obtained from the evaluation battery, and the porosity of the anode layer was measured. Specifically, SEM images of the first region and the second region of the anode layer were obtained at a magnification of 5000x and imported into ImageJ. Then, the porosity of each region was measured by image analysis. The results are shown in Table 1.

### Binding Pressure Fluctuation and Initial Resistance

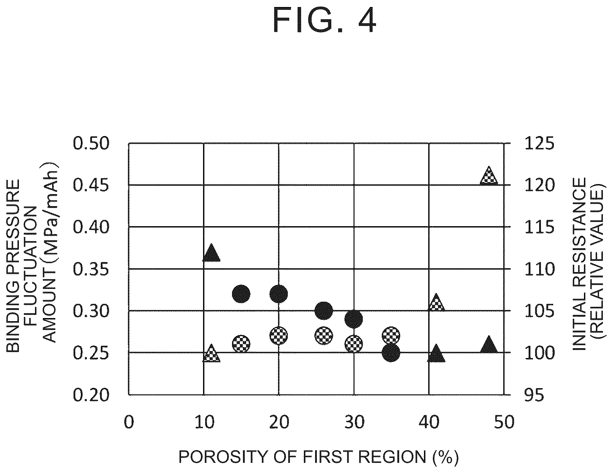

The prepared evaluation battery was charged and discharged under the conditions of 25°C, 1/3C, and 2.5 V to 4.05 V. The binding pressure was measured using a load cell, and a pressure fluctuation value in a second cycle was obtained as a binding pressure fluctuation amount. The results are shown in Table 1 and FIG. 4. A discharge resistance in a first cycle was obtained as an initial resistance. The results were evaluated relative to the results of Comparative Example 1. The results are shown in Table 1 and FIG. 4. In FIG. 4, the results of the examples are indicated by circles, and the results of the comparative examples are indicated by triangles. The solid symbols indicate the relationship between the porosity of the first region and the binding pressure fluctuation amount, and the hatched symbols indicate the relationship between the porosity of the first region and the initial resistance.

**Table 1**

| | Porosity of anode layer | | | Binding pressure fluctuation amount (MPa/mAh) | Initial resistance (relative value) |
|---|---|---|---|---|---|
| | First region (%) | Second region (%) | Difference | | |
| Comparative Example 1 | 11 | 10 | 1 | 0.37 | 100 |
| Example 1 | 15 | 13 | 2 | 0.32 | 101 |
| Example 2 | 20 | 8 | 12 | 0.32 | 102 |
| Example 3 | 26 | 9 | 17 | 0.30 | 102 |
| Example 4 | 30 | 8 | 22 | 0.29 | 101 |
| Example 5 | 35 | 10 | 25 | 0.25 | 102 |
| Comparative Example 2 | 41 | 8 | 33 | 0.25 | 106 |
| Comparative Example 3 | 48 | 9 | 39 | 0.26 | 121 |

As shown in Table 1 and FIG. 4, it was confirmed that the binding pressure fluctuation amount decreased and the volume change of the battery was suppressed as the porosity of the first region increased. In Comparative Examples 2 and 3, the porosity of the second region was substantially equal to that in the other comparative examples and the examples, but the porosity of the first region was too large, and the resistance increased. From these results, it was confirmed that, in the battery of the present disclosure, an increase in battery resistance was suppressed and the volume change of the battery was suppressed.

## Claims

1. A battery comprising a cathode current collector (1), a cathode layer (2), an electrolyte layer (3), an anode layer (4), and an anode current collector (5) in order of the cathode current collector, the cathode layer, the electrolyte layer, the anode layer, and the anode current collector in a thickness direction, wherein:
the anode layer (4) contains at least one of a Si-based active material and a Sn-based active material; and
when a thickness of the anode layer is defined as T, a region of the anode layer at a distance of 0T or more and 0.33T or less from an end of the anode layer near the electrolyte layer (3) in the thickness direction is defined as a first region, and a region of the anode layer at a distance of 0.66T or more and 1.0T or less from the end in the thickness direction is defined as a second region, and
when a porosity of the first region and a porosity of the second region that are measured from a sectional image of the battery are defined as X and Y, respectively,
the X is more than the Y, and
the X is 15% or more and 35% or less.

2. The battery according to claim 1, wherein the X and the Y satisfy (X - Y) ≥ 2.

3. The battery according to claim 1, wherein the Y is 8% or more and 13% or less.

4. The battery according to claim 1, wherein:
the anode layer (4) contains the Si-based active material; and
the Si-based active material is a composite particle in which a plurality of primary particles is agglomerated together with a binder.

5. A method for manufacturing the battery according to any one of claims 1 to 4, the method comprising:
preparing a laminate including the cathode current collector (1), the cathode layer (2), the electrolyte layer (3), a precursor layer of the anode layer (4), and the anode current collector (5) in order of the cathode current collector, the cathode layer, the electrolyte layer, the precursor layer of the anode layer, and the anode current collector in the thickness direction; and
charging the laminate such that the X and the Y are obtained in the precursor layer.
